# EUROPÄISCHE PATENTSCHRIFT

(11) **EP 3 976 916 B1**
(45) Veröffentlichungstag und Bekanntmachung des Hinweises auf die Patenterteilung: **20.03.2024**
(21) Anmeldenummer: 20727948.0
(22) Anmeldetag: 18.05.2020
(51) Int. Cl.: E05C 19/16

(54) **FAHRZEUGTÜRVORRICHTUNG MIT STROMLOSER OFFENHALTEFUNKTION**
VEHICLE DOOR DEVICE WITH CURRENTLESS OPEN-HOLDING FUNCTION
DISPOSITIF DE PORTE DE VÉHICULE À FONCTION DE MAINTIEN EN POSITION D'OUVERTURE NON ÉLECTRIQUE

(30) Priorität: 31.05.2019 DE 102019003808
(43) Veröffentlichungstag der Anmeldung: 06.04.2022
(73) Patentinhaber: Knorr-Bremse Gesellschaft mit beschränkter Haftung, 2340 Mödling (AT)
(72) Erfinder: ERNST, Michael, 3331 Hilm (AT)
(74) Vertreter: Wiedemann, Markus
(86) Internationale Anmeldenummer: PCT/EP2020/063790
(87) Internationale Veröffentlichungsnummer: WO 2020/239492

(56) Entgegenhaltungen:
- WO-A1-2015/199632
- WO-A1-2017/123908
- DE-B3-102015 210 593
- DE-U1-202006 017 402
- FR-A1- 2 960 899

## Beschreibung

Die Erfindung betrifft eine Fahrzeugtürvorrichtung gemäß dem Oberbegriff von Anspruch 1. Die Erfindung betrifft auch ein Fahrzeug, insbesondere ein Schienenfahrzeug mit wenigstens einer solchen Fahrzeugtürvorrichtung gemäß Anspruch 6.

Bei einer solchen Fahrzeugtürvorrichtung kann bei einer in Fahrtrichtung des Fahrzeugs gesehen vorliegenden Schräglage des Fahrzeugs die Öffnungsstellung der Schiebetüre oder Schwenkschiebetüre nur durch eine (weitere) Aktivierung der Antriebseinrichtung oder durch eine erst in Öffnungsstellung aktivierte Verriegelung gehalten werden, um beispielsweise einen Ein- oder Ausstieg von Personen in das Fahrzeug oder aus dem Fahrzeug oder ein Be- oder Entladen des Fahrzeugs zu ermöglichen. Dies ist dann allerdings nur möglich, wenn eine funktionsfähige Energiequelle, z.B. elektrischer Strom vorhanden ist, welcher die Antriebseinrichtung und/oder die Verriegelung mit Energie versorgt.

Eine gattungsgemäße Fahrzeugtürvorrichtung wird in WO 2015/199632 A1 offenbart. Dort sind an einer Fahrzeugtüre ein Permanentmagnet sowie ein Vorsprung angeordnet, wobei in der Öffnungsstellung der Türe der Vorsprung einen elektrischen Schalter schaltet, um einen elektrischen Kreis zu trennen, in welchen ein am Chassis angeordneter Elektromagnet geschaltet ist. In der Öffnungsstellung der Türe ist eine magnetische Anziehungskraft zwischen einem Kern des Elektromagneten und dem Permanentmagneten vorhanden.

FR 2 960 899 A1 offenbart ein System zur Steuerung einer Schrankschiebetür, wobei durch Abstoßungskräfte zwischen zwei Permanentmagneten, von denen ein Permanentmagnet an der Schrankschiebetüre und ein weiterer Permanentmagnet am Türrahmen angeordnet ist, die Schrankschiebetür abgebremst wird, wenn sie sich ihrer Schließstellung nähert.

WO 2017/123908 A1 offenbart ein Dämpfungssystem mit einem an einer Türführung geführten Türblatt, wobei das Dämpfungssystem einen Zylinder-Kolbentrieb sowie einen Permanentmagneten umfasst.

DE 10 2015 210 593 B3 offenbart eine Vorrichtung zum Halten und/oder Bremsen einer Tür mit einem fixierten ersten Magneten und einem mit der Tür verbundenen zweiten Magneten, wobei die Tür durch die Anziehungskraft zwischen den beiden Magneten in einer Türposition gehalten werden kann.

Der vorliegenden Erfindung liegt die Aufgabe zugrunde, eine eingangs genannte Fahrzeugtürvorrichtung derart weiterzubilden, dass sie es bei einfachem Aufbau ermöglicht, dass die Schiebetüre oder Schwenkschiebetüre ohne Einsatz von Fremdenergie in die Öffnungsstellung gedrängt oder in der Öffnungsstellung gehalten wird. Ebenso soll ein Fahrzeug mit einer solchen Fahrzeugtürvorrichtung zur Verfügung gestellt werden.

Diese Aufgabe wird erfindungsgemäß durch die Merkmale der Ansprüche 1 und 6 gelöst.

### Offenbarung der Erfindung

Die Erfindung geht aus von einer Fahrzeugtürvorrichtung, umfassend wenigstens Folgendes: Wenigstens eine gegenüber einem eine Türöffnung aufweisenden Türrahmen in einer Verschieberichtung verschiebbare Schiebetüre oder in einer Schwenkrichtung schwenkbare und in einer Verschieberichtung verschiebbare Schwenkschiebetüre, eine Antriebseinrichtung, durch welche die wenigstens eine Schiebetüre oder Schwenkschiebetüre in eine die Türöffnung verschließenden Schließstellung und in eine die Türöffnung frei gebende Öffnungsstellung sowie in beliebige Zwischenstellungen zwischen der Schließstellung und der Öffnungsstellung bewegbar ist, eine Türführung zur Führung der wenigstens einen Schiebetüre oder Schwenkschiebetüre relativ zur Türöffnung.

Unter einem Fahrzeug soll hier jegliche Art von Fahrzeugen verstanden werden, also spurgebundene Fahrzeuge (Schienenfahrzeuge) und auch nicht spurgebundene Fahrzeuge, Fahrzeuge mit Antriebsmaschine wie Kraftfahrzeuge und Triebfahrzeuge, und Fahrzeuge ohne Antriebsmaschine wie Anhänger oder Wagen in Schienenfahrzeugverbänden.

Eine (reine) Schiebetüre ist bekanntermaßen in einer oder entlang einer Verschieberichtung zwischen der Schließstellung und der Öffnungsstellung verschiebbar gelagert, während eine Schwenkschiebetür ausgehend von der Schließstellung in einer Schwenkrichtung zunächst verschwenkt und dann in einer Verschieberichtung verschoben wird, bis die Öffnungsstellung erreicht ist. Umgekehrt wird eine Schwenkschiebetüre ausgehend von der Öffnungsstellung zunächst entlang der Verschieberichtung verschoben und dann in einer Schenkrichtung verschwenkt, um die Schließstellung einzunehmen. Eine Schwenkschiebetüre führt daher eine kombinierte Schwenk- und Verschiebebewegung aus.

Die Türführung zur Führung der wenigstens einen Schiebetüre oder Schwenkschiebetüre entlang des Verschieberichtung bzw. entlang der Schwenkrichtung ist beispielsweise an einem Wagenkasten des Fahrzeugs befestigt, welcher die Türöffnung aufweist.

Weiterhin ist eine stromlos wirkende Magneteinrichtung vorgesehen, die wenigstens einen ersten Permanentmagneten und wenigstens ein magnetisch leitfähiges Element beinhaltet und die eine ohne Einwirkung von elektrischem Strom erzeugte magnetische Kraft auf die wenigstens eine Schiebetüre oder Schwenkschiebetüre derart direkt oder indirekt ausübt, dass die wenigstens eine Schiebetüre oder Schwenkschiebetüre ausgehend von einer Zwischenstellung in die Öffnungsstellung gedrängt und/oder in der bereits eingenommenen Öffnungsstellung gehalten wird, wobei die magnetische Kraft als magnetische Anziehungskraft zwischen dem wenigstens einen ersten Permanentmagneten und dem wenigstens einen magnetisch leitfähigen Element wirkt.

Unter einem magnetisch leitfähigen Element soll insbesondere ein Element verstanden werden, welches zumindest teilweise aus einem ferromagnetischen oder paramagnetischen Material besteht. Auch unterscheidet sich das wenigstens eine magnetisch leitfähige Element von einem Permanentmagneten.

Eine direkte Ausübung der magnetischen Kraft auf die Schiebetüre oder die Schwenkschiebetüre meint, dass sie unmittelbar an der Schiebetüre oder Schwenkschiebetüre angreift. Eine indirekte Ausübung der magnetischen Kraft auf die Schiebetüre oder die Schwenkschiebetüre meint, dass sie mittelbar an der Schiebetüre oder Schwenkschiebetüre angreift, insbesondere an wenigstens einem mit der Schiebetüre oder Schwenkschiebetüre verbundenen Element, welches auch ein Bestandteil der Antriebseinrichtung oder im Kraftfluss der Antriebseinrichtung angeordnet sein kann.

Weil bei Schwenkschiebetüren eine erste Bewegung aus der Schließstellung heraus meist eine Schwenkbewegung ist, an welche sich dann eine zweite Bewegung als reine Verschiebebewegung bis zum Erreichen der Öffnungsstellung anschließt, wirkt die magnetische Kraft gegen Ende der Verschiebebewegung, bevorzugt kurz bevor die Schwenkschiebetüre die Öffnungsstellung erreicht hat und insbesondere auch in der Öffnungsstellung.

Im Falle einer Schiebtüre wirkt die magnetische Kraft ebenfalls gegen Ende der Verschiebebewegung, bevorzugt kurz bevor die Schwenkschiebetüre die Öffnungsstellung erreicht hat und insbesondere auch in der Öffnungsstellung.

In einer Richtung senkrecht zur Ebene der Schiebetüre oder zur Schwenkschiebetüre gesehen überdecken sich dann der wenigstens eine erste Permanentmagnet und das wenigstens eine magnetisch leitfähige Element in der Öffnungsstellung wenigstens teilweise.

Dadurch ist zum Halten der wenigstens einen Schiebetüre oder Schwenkschiebetüre in der Öffnungsstellung oder zum Drängen dahin kein elektrischer Strom notwendig. Vielmehr sorgt dann die magnetische Kraft für ein Zubewegen der wenigstens einen Schiebetüre oder Schwenkschiebetüre in die Öffnungsstellung oder für ein dortiges Halten.

Gemäß der Erfindung sind der wenigstens eine erste Permanentmagnet mit der wenigstens einen Schiebetüre oder Schwenkschiebetüre und das wenigstens eine magnetisch leitfähige Element mit dem Türrahmen oder der Türführung jeweils statisch verbunden, wobei im Vergleich zu an das wenigstens eine magnetisch leitfähige Element angrenzenden Bereichen des Türrahmens oder der Türführung das wenigstens eine magnetisch leitfähige Element abhängig von dem Volumen, der Fläche und/oder von der Masse an magnetisch leitfähigem Material eine höhere oder niedrigere magnetische Leitfähigkeit besitzt, um sich hinsichtlich der magnetischen Leitfähigkeit von den angrenzenden Bereichen zu unterscheiden.

Alternativ sind gemäß der Erfindung der wenigstens eine erste Permanentmagnet mit dem Türrahmen oder der Türführung und das wenigstens eine magnetisch leitfähige Element mit der wenigstens einen Schiebetüre oder Schwenkschiebetüre jeweils statisch verbunden, wobei im Vergleich zu an das wenigstens eine magnetisch leitfähige Element angrenzenden Bereichen der Schiebetüre oder Schwenkschiebetüre das wenigstens eine magnetisch leitfähige Element abhängig von dem Volumen, der Fläche und/oder von der Masse an magnetisch leitfähigem Material eine höhere oder niedrigere magnetische Leitfähigkeit besitzt, um sich hinsichtlich der magnetischen Leitfähigkeit von den angrenzenden Bereichen zu unterscheiden.

In den Unteransprüchen sind vorteilhafte Weiterbildungen der in Anspruch 1 angegebenen Erfindung möglich.

Zusätzlich zwischen dem wenigstens einen ersten Permanentmagnet und dem wenigstens einen magnetisch leitfähigen Element kann ein Luftspalt minimal sein, wenn sich die wenigstens eine Schiebetüre oder Schwenkschiebetüre in der Öffnungsstellung befindet.

Beispielsweise kann das wenigstens eine magnetisch leitfähige Element eine relative oder lokale Anhäufung (z. B. in Bezug auf Volumen und/oder Masse und/oder Fläche) von magnetisch leitendem Material bilden. Dann kann beispielsweise eine magnetische Anziehungskraft zwischen dem wenigstens einen Permanentmagneten und dem wenigstens einen magnetisch leitfähigen Element dafür sorgen, dass die wenigstens eine Schiebetüre oder Schiebeschwenktüre in die Öffnungsstellung gedrängt oder in der Öffnungsstellung gehalten wird.

Alternativ kann das wenigstens eine magnetisch leitfähige Element auch eine lokale oder relative Reduktion (z. B. in Bezug auf Volumen und/oder Masse und/oder Fläche) von magnetisch leitendem Material ausbilden, indem beispielsweise in einem magnetisch leitenden Material eine Ausnehmung oder eine Durchgangsöffnung vorhanden ist, welche dann eine geringere magnetische Leitfähigkeit aufweist im Vergleich zu an das wenigstens eine magnetisch leitfähige Element angrenzenden Bereichen aus magnetisch leitfähigem Material. Überdeckt sich daher der wenigstens eine erste Permanentmagnet in einer Zwischenstellung mit einer solchen lokalen oder relativen Reduktion an magnetisch leitfähigem Material, so ist in dieser Überdeckungsstellung zwischen dem ersten Permanentmagneten und der lokalen Reduktion der magnetische Widerstand relativ groß. Folglich entsteht eine magnetische Anziehungskraft zwischen den an die relative oder lokale Reduktion angrenzenden Bereichen mit höherer magnetischer Leitfähigkeit (welche dann relative Anhäufungen an magnetisch leitendem Material bilden) und dem wenigstens einen ersten Permanentmagneten, welche die wenigstens eine Schiebetüre oder Schiebeschwenktüre in die Öffnungsstellung drängt oder in der Öffnungsstellung hält. Damit dieser Effekt eintreten kann, müssen der wenigstens eine erste Permanentmagnet und das wenigstens eine magnetisch leitfähige Element an geeigneten Stellen mit der Schiebetüre oder Schiebeschwenktüre bzw. mit dem Türrahmen oder der Türführung verbunden werden. Auch kann ein Luftspalt zwischen dem wenigstens einen ersten Permanentmagneten und dem wenigstens einen magnetisch leitfähigen Element in der Öffnungsstellung minimal sein, so dass auch dadurch der magnetische Widerstand minimal wird.

Weil der wenigstens eine erste Permanentmagnet und auch das wenigstens eine magnetisch leitfähige Element an der wenigstens einen Schiebetüre oder Schwenkschiebetüre bzw. an dem Türrahmen oder an der Türführung jeweils statisch angeordnet bzw. mit diesen Baugruppen starr verbunden sind, sind auch keine kinematisch zusammen wirkenden mechanischen Komponenten notwendig oder vorhanden, durch welche der wenigstens eine erste Permanentmagnet und/oder das wenigstens eine magnetisch leitfähige Element etwa beweglich (linear, rotatorisch) an dem Türrahmen und/oder an der Türführung und/oder an der wenigstens einen Schiebetüre oder Schenkschiebtüre gelagert sind, um die Richtung der Polarität des wenigstes einen ersten Permanentmagnet und/oder des wenigstens einen magnetisch leitfähigen Elements abhängig vom Verschiebeweg der Schiebetüre oder Schwenkschiebetüre anzupassen. Dies resultiert in einem konstruktiv einfachen Aufbau der Fahrzeugtürvorrichtung.

Insbesondere wird daher die magnetische Kraft durch die Wechselwirkung zwischen dem wenigstens einen ersten Permanentmagneten und dem wenigstens einen, wenigstens in der Öffnungsstellung im magnetischen Fluss des wenigstens einen ersten Permanentmagneten befindlichen magnetisch leitfähigen Elements erzeugt.

Die magnetische Kraft ist insbesondere eine magnetische Reluktanzkraft, welche zwischen dem wenigstens einen ersten Permanentmagneten und dem wenigstens einen magnetisch leitfähigen Element derart wirkt, dass sich der magnetische Widerstand des magnetischen Flusses zwischen dem wenigstens einen ersten Permanentmagneten und dem wenigstens einen magnetisch leitfähigen Element verringert oder minimal ist, wenn sich die wenigstens eine Schiebetüre oder Schwenkschiebetüre in der Öffnungsstellung befindet.

Die Erfindung betrifft auch ein Fahrzeug, insbesondere ein Schienenfahrzeug mit wenigstens einer oben beschriebenen Fahrzeugtürvorrichtung.

### Zeichnung

Nachstehend sind Ausführungsbeispiele der Erfindung in der Zeichnung dargestellt und in der nachfolgenden Beschreibung näher erläutert. In der Zeichnung zeigt
- Fig.1: eine schematische Seitenansicht einer Fahrzeugschiebetürvorrichtung als bevorzugte Ausführungsform der Erfindung mit einer Schiebetüre in Öffnungsstellung;
- Fig.2: eine Schnittdarstellung entlang der Linie II von Fig.1;
- Fig.3: eine Schnittdarstellung durch einen Teil einer Fahrzeugschiebetürvorrichtung gemäß einer nicht erfindungsgemäßen Ausführungsform;
- Fig. 4: eine perspektivische Ansicht eines Teils der Fahrzeugschiebetürvorrichtung von Fig. 3 mit der Schiebetüre in der Öffnungsstellung;
- Fig. 5: eine Schnittdarstellung durch eine Fahrzeugschiebetürvorrichtung gemäß einer weiteren Ausführungsform der Erfindung mit der Schiebetüre in einer Zwischenstellung zwischen einer Schließstellung und einer Öffnungsstellung.

### Beschreibung der Ausführungsbeispiele

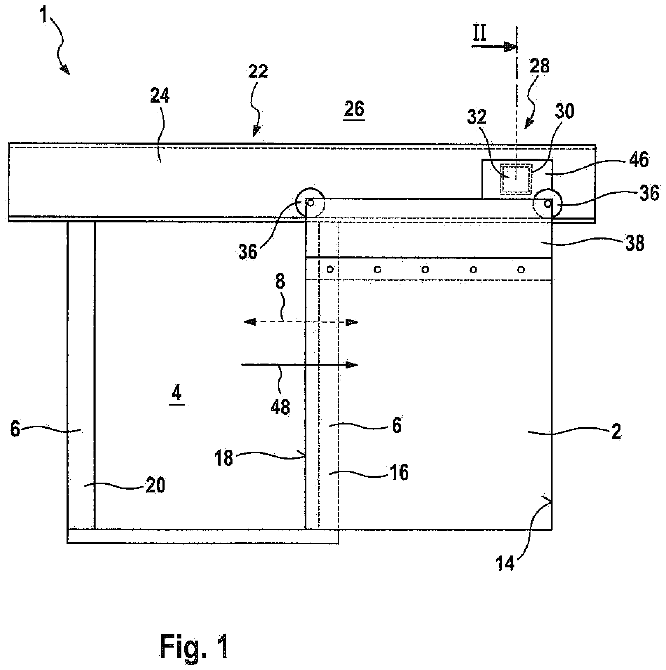

In **Fig.1** ist eine schematische Seitenansicht einer Schiebetürvorrichtung 1 eines Schienenfahrzeugs als bevorzugte Ausführungsform einer Fahrzeugtürvorrichtung der Erfindung gezeigt. Die Schiebetürvorrichtung 1 ist hier vorzugsweise einflügelig mit nur einem Türflügel oder nur einer Schiebetüre 2 ausgeführt. Alternativ kann die Erfindung auch bei einer mehrflügeligen und insbesondere zweiflügeligen Schiebetürvorrichtung mit zwei Schiebetüren zum Einsatz kommen.

Hier weist die Schiebetürvorrichtung 1 eine gegenüber einem eine Türöffnung 4 aufweisenden Türrahmen 6 oder gegenüber der Türöffnung 4 in einer durch den mit gestrichelter Linie in **Fig**. **1** gezeichneten Doppelpfeil 8 symbolisierten Verschieberichtung verschiebbare Schiebetüre 2 auf. Außerdem umfasst die Schiebetürvorrichtung 1 eine hier aus Übersichtlichkeitsgründen nicht gezeigte beispielsweise elektrische Antriebseinrichtung auf, durch welche die Schiebetüre 2 in eine die Türöffnung 4 verschließenden Schließstellung und in eine die Türöffnung 4 frei gebende Öffnungsstellung sowie in beliebige Zwischenstellungen zwischen der Schließstellung und der Öffnungsstellung bewegbar ist.

Im gezeigten Ausführungsbeispiel hat in der Öffnungsstellung **(****Fig. 1****)** ein erster vertikaler Schiebetürrand 14 einen ersten vertikalen Rahmenteil 16 des Türrahmens 6 während des Einnehmens der Öffnungsstellung überfahren oder passiert. Der zweite vertikale Schiebetürrand 18 ist in der Öffnungsstellung von einem zweiten vertikalen Rahmenteil 20 des Türrahmens 6 beabstandet, so dass dann die Türöffnung 4 zwischen den beiden vertikalen Rahmenteilen 16, 20 und hier nur teilweise gezeigten horizontalen Rahmenteilen des Türrahmens 6 vollständig frei gegeben ist.

Die Schiebetüre 1 ist an einer hier in Gebrauchslage beispielsweise oberen Türführung 22 in der Verschieberichtung 8 verschieblich gelagert, wobei die Türführung 22 hier beispielsweise ein oberes Trägerblech 24 beinhaltet, das an einem Wagenkasten 26 des Schienenfahrzeugs gehalten wird. Die Türführung 22 ist dabei beispielsweise mehr als doppelt so lang als die Breite der Türöffnung 4, damit diese vollständig freigegeben werden kann, wie anhand von **Fig. 1** leicht vorstellbar ist. Weiterhin ist das obere Trägerblech 24 parallel zu einem oberen horizontalen Rahmenteil des Türrahmens 6 angeordnet. Neben dem oberen Trägerblech 24 kann die Türführung 22 noch weitere Trägerelemente aufweisen, durch welche die Schiebetüre 2 an dem Wagenkasten 26 verschieblich gelagert ist.

Die Schiebetürvorrichtung 1 umfasst weiterhin eine stromlos wirkende Magneteinrichtung 28, die eine ohne Einwirkung von elektrischem Strom erzeugte magnetische Kraft 48 auf die Schiebetüre 2 derart ausübt, dass die Schiebetüre 2 beispielsweise in der in **Fig. 1** gezeigten Öffnungsstellung gehalten wird.

Im Ausführungsbeispiel von **Fig. 1** beinhaltet die Magneteinrichtung 28 beispielsweise einen ersten Permanentmagneten 30 sowie ein magnetisch leitfähiges Element 32, wobei der erste Permanentmagnet 30 beispielsweise mit der Schiebetüre 2 und das magnetisch leitfähige Element 32 beispielsweise mit der Türführung 22 jeweils statisch oder starr verbunden ist. Denkbar ist jedoch auch die umgekehrte Anordnung von erstem Permanentmagneten 30 und magnetisch leitfähigem Element 32, so dass dann der erste Permanentmagnet 30 mit der Türführung 22 und das magnetisch leitfähige Element 32 mit der Schiebetüre 2 jeweils statisch oder starr verbunden ist.

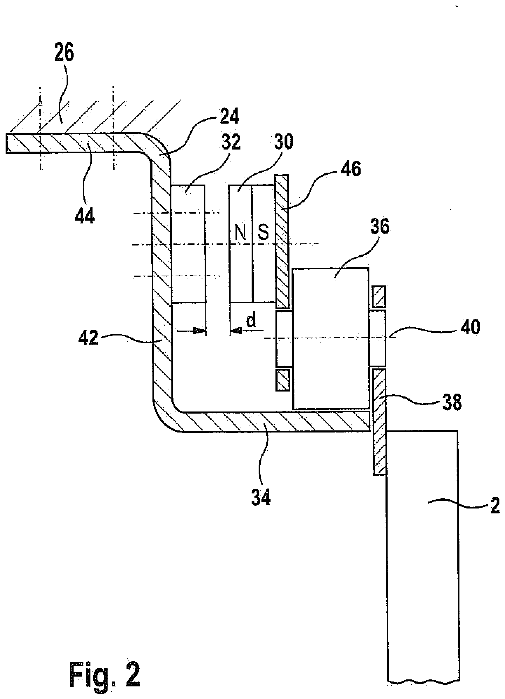

Wie Fig. 2 zeigt, hat das hier wenigstens einen Teil der Türführung 22 ausbildende obere Trägerblech 24 beispielsweise einen annährend Z-förmigen Querschnitt, wobei ein erster in einer in Gebrauchslage horizontalen Ebene verlaufender Schenkel 34 des Trägerblechs 24 beispielsweise eine ebene Laufrollenbahn für Laufrollen 36 ausbildet, welche an Verbindungsteilen 38 um Rotationsachsen 40 drehbar gehalten sind, welche senkrecht zur Ebene der Schiebetüre 2 ausgerichtet sind. Die Verbindungsteile 38 verbinden die Laufrollen 36 mit der Schiebetüre 2, so dass die Schiebetüre 2 über die Laufrollen 36 in der Verschieberichtung 8 gegenüber dem Türrahmen 6 und entlang des Trägerblechs 24 verschieb- oder rollbar ist. Ein zweiter, in Gebrauchslage etwa vertikal ausgerichteter Schenkel 42 des Trägerblechs 24 trägt das magnetisch leitfähige Element 32 insbesondere in Form eines beispielsweise kubischen Körpers, der aus magnetisch hoch leitfähigem ferromagnetischem Material besteht. Der dritte Schenkel 44 des Trägerblechs 24 ist mit dem Wagenkasten 26 des Schienenfahrzeugs verbunden. Das Trägerblech 24 selbst ist wegen seiner relativ geringen Wandstärke gegenüber dem magnetisch leitfähigen Element 32 in geringerem Maße magnetisch leitfähig. Das magnetisch leitfähige Element 32 bildet folglich eine Art von lokaler oder relativer Anhäufung von magnetisch leitfähigem Material gegenüber dem Trägerblech 24.

Im vorliegenden Beispiel sind zwei Laufrollen 36 mit je einem Verbindungsteil 38 an einem in Gebrauchslage oberen horizontalen Schiebetürrand jeweils endseitig, d. h. im Bereich der beiden vertikalen Schiebetürränder 14, 18 vorhanden. Dabei ist an der Laufrolle 36, die in **Fig. 1** zu dem vertikalen ersten Rahmenteil 16 des Türrahmens 6 weist, beispielsweise dem Verbindungsteil 38 gegenüberliegend ein Tragteil 46 vorhanden, welches mit dem Verbindungsteil 38 und damit auch mit der Schiebetüre 2 verbunden ist. Die Laufrolle 36 ist dann beispielsweise an dem Verbindungsteil 38 und dem Tragteil 46 rotatorisch gelagert. Das Tragteil 46 trägt hier beispielsweise den ersten Permanentmagneten 30. In einer Richtung senkrecht zur Ebene der Schiebetüre 2 gesehen überdecken der an der Schiebetüre 2 befestigte erste Permanentmagnet 30 und das an dem Trägerblech 24 befestigte magnetisch leitfähige Element 32 dann beispielsweise wenigstens teilweise in der Öffnungsstellung der Schiebetüre 2, wie in **Fig. 2** gezeigt ist.

Im Folgenden sei nun der Fall angenommen, dass am Schienenfahrzeug der Strom abgestellt wird oder ausgefallen ist, wenn sich die Schiebetüre 2 in der Öffnungsstellung befindet oder in diese gefahren worden ist und dann die Schiebetüre 2 nicht wie üblich durch eine elektrische Betätigung der Antriebseinrichtung oder durch anderweitige Fremdkräfte in der Öffnungsstellung gehalten werden kann. Falls dann das Schienenfahrzeug auch noch in Fahrrichtung gesehen schräg steht, so könnte die Schiebetüre 2 nicht in der gezeigten Öffnungsstellung gehalten werden.

In der Öffnungsstellung der Schiebetüre 2 wirkt dann jedoch die magnetische Kraft 48 in Form einer magnetischen Reluktanzkraft zwischen dem ersten Permanentmagneten 30 und dem magnetisch leitfähigen Element 32 derart oder in einer derartigen Richtung, dass sich der magnetische Widerstand des magnetischen Flusses zwischen dem ersten Permanentmagneten 30 und dem magnetisch leitfähigen Element 32 verringert. Folglich wirkt bei dem hier beschriebenen Beispiel in der Öffnungsstellung zwischen dem ersten Permanentmagneten 30 und dem hierzu in Verschieberichtung gesehen dann in Überdeckung befindlichen magnetisch leitfähigen Element 32 die magnetische Reluktanzkraft 48 in Form einer Anziehungskraft, weil hier beispielsweise das Trägerblech 24 gegenüber dem magnetisch leitfähigen Element 32 eine wesentlich geringere magnetische Leitfähigkeit aufweist und die magnetische Reluktanzkraft 48 nun versucht, den magnetischen Widerstand durch Halten des ersten Permanentmagneten 30 in Überdeckungsstellung zum magnetisch leitfähigen Element 32 zu reduzieren. In der Öffnungsstellung der Schiebetüre 2 ist beispielsweise auch ein Luftspalt d zwischen dem ersten Permanentmagneten 30 und dem magnetisch leitfähigen Element 32 minimal, so dass in der Öffnungsstellung der Schiebetüre 2 der magnetische Widerstand des magnetischen Flusses zwischen dem ersten Permanentmagneten 30 und dem magnetisch leitfähigen Element 32 minimal ist.

Die magnetische Reluktanzkraft 48 hält dann die Schiebetüre 2 in der Öffnungsstellung, weil der erste Permanentmagnet 30 an der Schiebetüre 2 sich mit dem magnetisch leitfähigen Element 32 an dem Trägerblech 24 der Türführung 22 überdeckt und zudem dort der Luftspalt d zwischen dem ersten Permanentmagneten 30 und dem magnetisch leitfähigen Element 32 minimal ist, wobei dann in dieser Position der magnetische Widerstand in Verschieberichtung 8 minimal ist und dann zumindest in Verschieberichtung 8 keine magnetische Reluktanzkraft 48 mehr wirkt.

Die Schiebetüre 2 kann dann aber ohne weiteres händisch aus der Öffnungsstellung in beliebige Zwischenstellungen und in die Schließstellung bewegt werden. Da die Antriebseinrichtung bei dem hier angenommenen entströmten Zustand keine Gegenkräfte aufzubringen vermag, ist dies auch ohne großen Kraftaufwand zu bewerkstelligen.

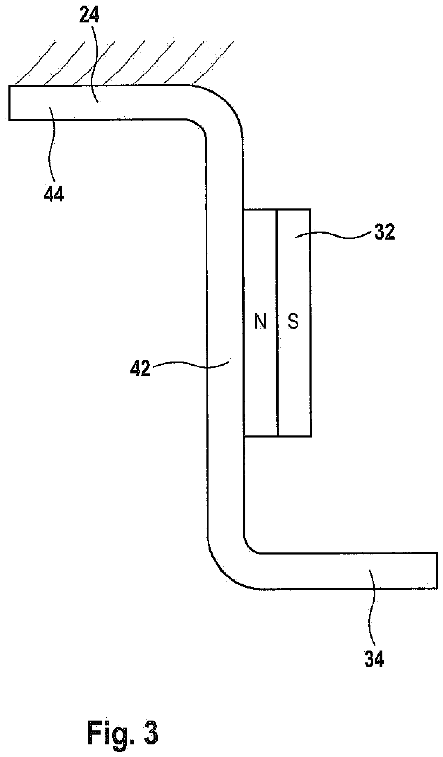

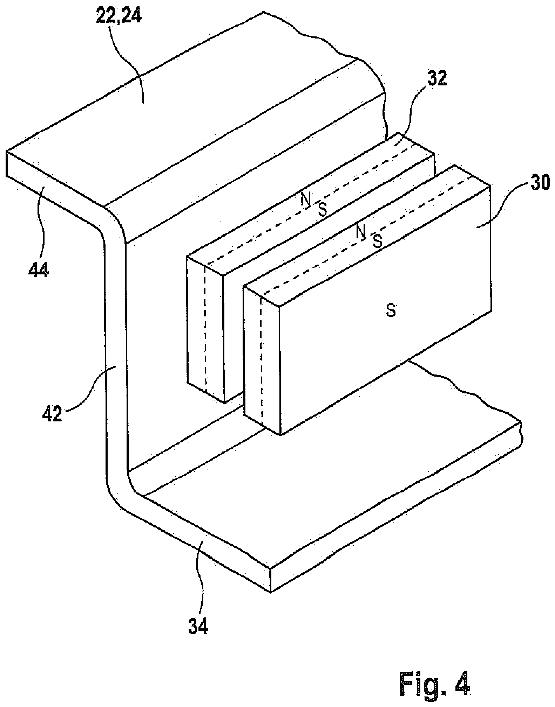

Der Unterschied der nicht erfindungsgemäßen Ausführungsform von **Fig. 3** und **Fig. 4** zu der Ausführungsform von **Fig. 1** und **Fig. 2** besteht darin, dass das am Trägerblech 24 befestigte magnetisch leitfähige Element 32 durch einen zweiten Permanentmagneten gebildet wird, welcher sich dann in der Öffnungsstellung der Schiebetüre 2 ebenfalls in einer Überdeckungsstellung in Bezug zu dem ersten Permanentmagneten 30 befindet, welcher an der Schiebetüre 2 befestigt ist. Die Polarisierung des ersten Permanentmagneten 30 und des zweiten Permanentmagneten 32 ist dann dergestalt, dass sich in der in **Fig. 4** gezeigten Überdeckungsstellung, welche der Öffnungsstellung entspricht, ungleichnamige Pole (Nordpol und Südpol) gegenüberliegen, so dass dann eine magnetische Anziehungskraft als Reluktanzkraft 48 zwischen den beiden Permanentmagneten 30, 32 wirkt, welche die Schiebetüre 2 in der Öffnungsstellung halten.

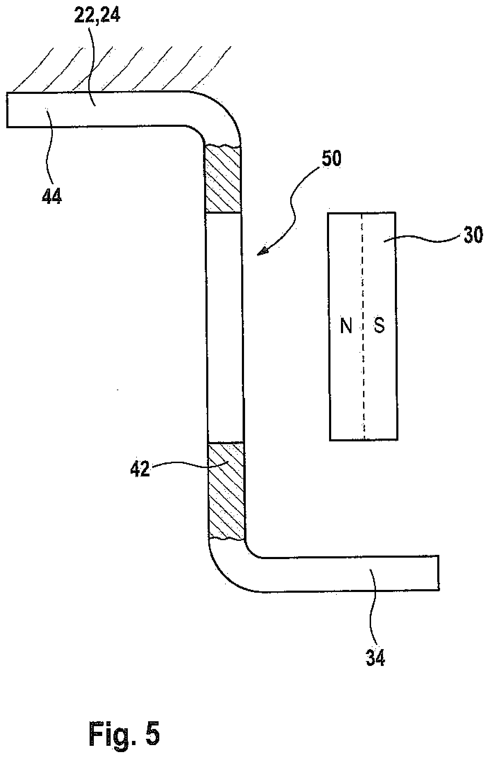

**Fig. 5** stellt eine Schnittdarstellung durch einen Teil einer Schiebetürvorrichtung 1 gemäß einer weiteren Ausführungsform dar, wobei die Schiebetüre 2 sich hier in einer Zwischenstellung zwischen der Schließstellung und der Öffnungsstellung befindet. Bei dieser Ausführungsform trägt die Schiebetüre 2 beispielsweise ebenfalls den ersten Permanentmagneten 30. In der Zwischenstellung dem ersten Permanentmagneten 30 gegenüberliegend ist eine lokale Durchgangsöffnung 50 in der Wandung beispielsweise des zweiten Schenkels 42 des Trägerblechs 24 ausgebildet. Das Trägerblech 24 ist wiederum aus magnetisch leitfähigem Material. Folglich überdeckt sich in der Zwischenstellung der erste Permanentmagnet 30 annähernd mit dieser Durchgangsöffnung 50, wobei dann der magnetische Widerstand relativ groß ist, weil die Luft in der Durchgangsöffnung 50 nur eine sehr geringe magnetische Leitfähigkeit aufweist. Zum Reduzieren des magnetischen Widerstands entsteht nun eine magnetische Reluktanzkraft 48, welche versucht, den ersten Permanentmagneten 30 zusammen mit der Schiebetüre 2 in Bereiche mit höherer magnetischer Leitfähigkeit des Trägerblechs 24 zu ziehen. Daher wirkt die Reluktanzkraft 48 in Verschieberichtung 8 gesehen zum Rand der Durchgangsöffnung 50 im Trägerblech 24 hin. Denn an den an die Durchgangsöffnung 50 angrenzenden Bereichen des Trägerblechs 24 ist eine Art von lokaler oder relativer Anhäufung von magnetisch leitfähigem Material vorhanden, welche dann demgegenüber der Durchgangsöffnung 50 eine größere magnetische Leitfähigkeit besitzen.

Die magnetische Reluktanzkraft 48, welche auf die Schiebetüre 2 in der Öffnungsstellung wirkt, basiert daher auf einem Unterschied in der magnetischen Leitfähigkeit zwischen einem ersten Abschnitt des Trägerblechs 24 in Form der nicht durchbrochenen Wandung ("lokale Anhäufung von magnetisch leitfähigem Material") des aus magnetisch leitfähigem Material bestehenden Trägerblechs 24 und einem zweiten Abschnitt des Trägerblechs 24 in Form der Durchgangsöffnung 50 ("lokale Reduktion von magnetisch leitfähigem Material"), wobei die ersten und zweiten Abschnitte in Verschieberichtung 8 gesehen in der Öffnungsstellung der Schiebetüre hintereinander angeordnet und um einen Versatz gegeneinander versetzt sind. Der Unterschied in der magnetischen Leitfähigkeit zwischen dem ersten Abschnitt (durchgehende Wandung) und dem zweiten Abschnitt des Trägerblechs (Durchgangsöffnung) kann allgemein durch ein unterschiedliches Volumen, eine unterschiedliche Fläche und/oder eine unterschiedliche Masse von magnetisch leitfähigem Material erzeugt werden.

Anstatt an dem Trägerblech 24 bzw. an der Türführung 22 könnte das magnetisch leitfähige Element 32 auch am Türrahmen 6 derart starr befestigt oder mit diesen Bauteilen derart starr verbunden sein, dass eine magnetische Reluktanzkraft 48 in Form einer magnetischen Anziehungs- oder Abstoßungskraft erzeugt wird, welche die Schiebetüre 2 in die Öffnungsstellung zieht oder schiebt oder in der Öffnungsstellung hält.

Weiterhin kommt es nicht darauf an, dass der erste Permanentmagnet 30 mit der Schiebetüre 2 statisch verbunden ist und das magnetisch leitfähige Element 32 mit dem Türrahmen 6 oder der Türführung 22. Die Verhältnisse können auch umgekehrt werden.

Das oben beschriebene Prinzip einer stromlosen Offenhaltefunktion für eine Schiebetüre 2 einer Schiebetürvorrichtung 1 mit Hilfe einer magnetischen Reluktanzkraft 48 ist ohne weiteres auch auf eine Schwenkschiebetürvorrichtung mit wenigstens einer Schwenkschiebetüre übertragbar, wobei der einzige Unterschied darin besteht, dass die Schwenkschiebetüre ausgehend von der Schließstellung zunächst eine Schwenkbewegung ausführt, welche durch die Türführung dann später in eine reine Verschiebebewegung übergeht, an deren Ende sich dann die Öffnungsstellung befindet. Der erste Permanentmagnet 30 und das magnetisch leitfähige Element 32 sind dann wie bei einer Schiebetürvorrichtung so anzuordnen, dass die magnetische Reluktanzkraft 48 in der Phase des Verschiebens der Schwenkschiebetüre wirkt, um das gewünschte Halten der Schwenkschiebetüre in der Öffnungsstellung zu erreichen.

### Bezugszeichenliste

- 1: Schiebetürvorrichtung
- 2: Schiebetüre
- 4: Türöffnung
- 6: Türrahmen
- 8: Verschieberichtung
- 14: erster vertikaler Schiebetürrand
- 16: erstes vertikales Rahmenteil
- 18: zweiter vertikaler Schiebetürrand
- 20: zweites vertikales Rahmenteil
- 22: Türführung
- 24: oberes Trägerblech
- 26: Wagenkasten
- 28: Magneteinrichtung
- 30: erster Permanentmagnet
- 32: magnetisch leitfähiges Element
- 34: erster Schenkel
- 36: Laufrollen
- 38: Verbindungsteil
- 40: Rotationsachse
- 42: zweiter Schenkel
- 44: dritter Schenkel
- 46: Tragteil
- 48: Reluktanzkraft
- 50: Durchgangsöffnung

## Patentansprüche

1. Fahrzeugtürvorrichtung (1), umfassend wenigstens Folgendes:
a) Wenigstens eine gegenüber einem eine Türöffnung (4) aufweisenden Türrahmen (6) in einer Verschieberichtung (8) verschiebbare Schiebetüre (2) oder in einer Schwenkrichtung schwenkbare und in einer Verschieberichtung verschiebbare Schwenkschiebetüre,
b) eine Antriebseinrichtung, durch welche die wenigstens eine Schiebetüre (2) oder Schwenkschiebetüre in eine die Türöffnung (4) verschließende Schließstellung und in eine die Türöffnung (4) frei gebende Öffnungsstellung sowie in beliebige Zwischenstellungen zwischen der Schließstellung und der Öffnungsstellung bewegbar ist,
c) eine Türführung (22, 24) zur Führung der wenigstens einen Schiebetüre (2) oder Schwenkschiebetüre relativ zur Türöffnung (4),
d) eine stromlos wirkende Magneteinrichtung (28), die wenigstens einen ersten Permanentmagneten (30) und wenigstens ein magnetisch leitfähiges Element (32) beinhaltet und die eine ohne Einwirkung von elektrischem Strom erzeugte magnetische Kraft (48) auf die wenigstens eine Schiebetüre (2) oder Schwenkschiebetüre derart direkt oder indirekt ausübt, dass die wenigstens eine Schiebetüre (2) oder Schwenkschiebetüre
d1) ausgehend von einer Zwischenstellung in die Öffnungsstellung gedrängt, und/oder
d2) in der bereits eingenommenen Öffnungsstellung gehalten wird, wobei die magnetische Kraft (48) als magnetische Anziehungskraft zwischen dem wenigstens einen ersten Permanentmagneten (30) und dem wenigstens einen magnetisch leitfähigen Element (32) wirkt, **dadurch gekennzeichnet, dass** in einer Richtung senkrecht zur Ebene der Schiebetüre (2) oder zur Schwenkschiebetüre gesehen sich der wenigstens eine erste Permanentmagnet (30) und das wenigstens eine magnetisch leitfähige Element (32) in der Öffnungsstellung wenigstens teilweise überdecken, und dass sich das wenigstens eine magnetisch leitfähige Element (32) von einem Permanentmagneten unterscheidet, und dass entweder der wenigstens eine erste Permanentmagnet (30) mit der wenigstens einen Schiebetüre (2) oder Schwenkschiebetüre und das wenigstens eine magnetisch leitfähige Element (32) mit dem Türrahmen (6) oder der Türführung (22, 24) jeweils statisch verbunden sind, und dass im Vergleich zu an das wenigstens eine magnetisch leitfähige Element (32) angrenzenden Bereichen des Türrahmens (6) oder der Türführung (22, 24) das wenigstens eine magnetisch leitfähige Element (32) abhängig von dem Volumen, der Fläche und/oder von der Masse an magnetisch leitfähigem Material eine höhere magnetische Leitfähigkeit besitzt, oder der wenigstens eine erste Permanentmagnet (30) mit dem Türrahmen (6) oder der Türführung (22, 24) und das wenigstens eine magnetisch leitfähige Element (32) mit der wenigstens einen Schiebetüre (2) oder Schwenkschiebetüre jeweils statisch verbunden sind, und dass im Vergleich zu an das wenigstens eine magnetisch leitfähige Element (32) angrenzenden Bereichen der Schiebetüre (2) oder Schwenkschiebetüre das wenigstens eine magnetisch leitfähige Element (32) abhängig von dem Volumen, der Fläche und/oder von der Masse an magnetisch leitfähigem Material eine höhere magnetische Leitfähigkeit besitzt.

2. Fahrzeugtürvorrichtung nach Anspruch 1, **dadurch gekennzeichnet, dass** zwischen dem wenigstens einen ersten Permanentmagnet (30) und dem wenigstens einen magnetisch leitfähigen Element (32) ein Luftspalt (d) minimal ist, wenn sich die wenigstens eine Schiebetüre (2) oder Schwenkschiebetüre in der Öffnungsstellung befindet.

3. Fahrzeugtürvorrichtung nach einem der vorhergehenden Ansprüche, **dadurch gekennzeichnet, dass** das wenigstens eine magnetisch leitfähige Element (32) eine lokale Anhäufung von magnetisch leitfähigem Material bildet.

4. Fahrzeugtürvorrichtung nach einem der vorhergehenden Ansprüche, **dadurch gekennzeichnet, dass** die magnetische Kraft (48) durch die Wechselwirkung zwischen dem wenigstens einen ersten Permanentmagneten (30) und dem wenigstens einen, wenigstens in der Öffnungsstellung im magnetischen Fluss des wenigstens einen ersten Permanentmagneten (30) befindlichen magnetisch leitfähigen Element (32) erzeugt wird.

5. Fahrzeugtürvorrichtung nach einem der vorhergehenden Ansprüche, **dadurch gekennzeichnet, dass** die magnetische Kraft (48) eine magnetische Reluktanzkraft ist, welche zwischen dem wenigstens einen ersten Permanentmagneten (30) und dem wenigstens einen magnetisch leitfähigen Element (32) derart wirkt, dass sich der magnetische Widerstand des magnetischen Flusses zwischen dem wenigstens einen ersten Permanentmagneten (30) und dem wenigstens einen magnetisch leitfähigen Element (32) verringert oder minimal ist, wenn sich die wenigstens eine Schiebetüre (2) oder Schwenkschiebetüre in der Öffnungsstellung befindet.

6. Fahrzeug, insbesondere Schienenfahrzeug mit wenigstens einer Fahrzeugtürvorrichtung (1) nach einem der vorhergehenden Ansprüche.

## Claims

1. Vehicle door device (1), comprising at least the following:
a) at least one sliding door (2) which can be slid in a sliding direction (8) or a pivoting and sliding door which can be pivoted in a pivoting direction and slid in a sliding direction relative to a door frame (6) that has a door opening (4);
b) a drive apparatus by means of which the at least one sliding door (2) or pivoting and sliding door can be moved into a closed position which closes the door opening (4) and into an open position which releases the door opening (4), as well as into any intermediate positions between the closed position and the open position,
c) a door guide (22, 24) for guiding the at least one sliding door (2) or pivoting and sliding door relative to the door opening (4),
d) a magnet apparatus (28) which operates without current, which includes at least one first permanent magnet (30) and at least one magnetically conductive element (32) and which exerts a magnetic force (48), generated without the action of electric current, directly or indirectly on the at least one sliding door (2) or pivoting and sliding door in such a way that the at least one sliding door (2) or pivoting and sliding door
d1) is urged from an intermediate position into the open position, and/or
d2) is held in the already assumed open position, wherein the magnetic force (48) acts as a magnetic attraction force between the at least one first permanent magnet (30) and the at least one magnetically conductive element (32), **characterised in that**, viewed in a direction perpendicular to the plane of the sliding door (2) or to the pivoting and sliding door, the at least one first permanent magnet (30) and the at least one magnetically conductive element (32) at least partially overlap in the open position, and **in that** the at least one magnetically conductive element (32) differs from a permanent magnet, and **in that** either the at least one first permanent magnet (30) is statically connected to the at least one sliding door (2) or pivoting and sliding door and the at least one magnetically conductive element (32) is statically connected to the door frame (6) or the door guide (22, 24) in each case, and **in that**, compared to regions of the door frame (6) or the door guide (22, 24) adjacent to the at least one magnetically conductive element (32), the at least one magnetically conductive element (32) has a higher magnetic conductivity depending on the volume, the area and/or the mass of magnetically conductive material, or the at least one first permanent magnet (30) is statically connected to the door frame (6) or the door guide (22, 24) and the at least one magnetically conductive element (32) is statically connected to the at least one sliding door (2) or pivoting and sliding door in each case, and **in that**, compared to regions of the sliding door (2) or pivoting and sliding door adjacent to the at least one magnetically conductive element (32), the at least one magnetically conductive element (32) has a higher magnetic conductivity depending on the volume, the area and/or the mass of magnetically conductive material.

2. Vehicle door device according to claim 1, **characterised in that** an air gap (d) between the at least one first permanent magnet (30) and the at least one magnetically conductive element (32) is minimal when the at least one sliding door (2) or pivoting and sliding door is in the open position.

3. Vehicle door device according to any one of the preceding claims, **characterised in that** the at least one magnetically conductive element (32) forms a local cluster of magnetically conductive material.

4. Vehicle door device according to any one of the preceding claims, **characterised in that** the magnetic force (48) is generated by the interaction between the at least one first permanent magnet (30) and the at least one magnetically conductive element (32) located in the magnetic flux of the at least one first permanent magnet (30) at least in the open position.

5. Vehicle door device according to any one of the preceding claims, **characterised in that** the magnetic force (48) is a magnetic reluctance force which acts between the at least one first permanent magnet (30) and the at least one magnetically conductive element (32) in such a way that the magnetic resistance of the magnetic flux between the at least one first permanent magnet (30) and the at least one magnetically conductive element (32) is reduced or is minimal when the at least one sliding door (2) or pivoting and sliding door is in the open position.

6. Vehicle, in particular rail vehicle, having at least one vehicle door device (1) according to any one of the preceding claims.

## Revendications

1. Dispositif de porte de véhicule (1), comprenant au moins les éléments suivants :
a) au moins une porte coulissante (2) coulissant dans un sens de coulissement (8) par rapport à un cadre de porte (6) présentant une ouverture de porte (4) ou porte coulissante pivotante coulissant dans un sens de coulissement et pivotant dans un sens de pivotement,
b) un dispositif d'entraînement, par lequel l'au moins une porte coulissante (2) ou porte coulissante pivotante est mobile dans une position de fermeture fermant l'ouverture de porte (4) et dans une position d'ouverture libérant l'ouverture de porte (4) ainsi que dans des positions intermédiaires quelconques entre la position de fermeture et la position d'ouverture,
c) un guidage de porte (22, 24) pour le guidage de l'au moins une porte coulissante (2) ou porte coulissante pivotante par rapport à l'ouverture de porte (4),
d) un dispositif magnétique (28) agissant sans courant qui contient au moins un premier aimant permanent (30) et au moins un élément (32) conducteur magnétiquement et qui exerce directement ou indirectement une force (48) magnétique générée sans action de courant électrique sur l'au moins une porte coulissante (2) ou porte coulissante pivotante de telle manière que l'au moins une porte coulissante (2) ou porte coulissante pivotante
d1) soit poussée à partir d'une position intermédiaire dans la position d'ouverture, et/ou
d2) soit maintenue dans la position d'ouverture déjà occupée, dans lequel la force magnétique (48) agit comme force d'attraction magnétique entre l'au moins un premier aimant permanent (30) et l'au moins un élément (32) conducteur magnétiquement, **caractérisé en ce que** vu dans une direction perpendiculaire au plan de la porte coulissante (2) ou porte coulissante pivotante, l'au moins un premier aimant permanent (30) et l'au moins un élément (32) conducteur magnétiquement se recouvrent au moins partiellement dans la position d'ouverture, et que l'au moins un élément (32) conducteur magnétiquement se distingue d'un aimant permanent, et que l'au moins un premier aimant permanent (30) est relié respectivement statiquement à l'au moins une porte coulissante (2) ou porte coulissante pivotante et l'au moins un élément (32) conducteur magnétiquement au cadre de porte (6) ou au guidage de porte (22, 24), et que par rapport aux zones contiguës à l'au moins un élément (32) conducteur magnétiquement du cadre de porte (6) ou du guidage de porte (22, 24), l'au moins un élément (32) conducteur magnétiquement possède une conductivité magnétique supérieure en fonction du volume, de la surface et/ou de la masse de matériau conducteur magnétiquement ou l'au moins un premier aimant permanent (30) est relié respectivement statiquement au cadre de porte (6) ou guidage de porte (22, 24) et l'au moins un élément (32) conducteur magnétiquement à l'au moins une porte coulissante (2) ou porte coulissante pivotante, et que par rapport aux zones contiguës à l'au moins un élément (32) conducteur magnétiquement de la porte coulissante (2) ou porte coulissante pivotante, l'au moins un élément (32) conducteur magnétiquement possède une conductivité magnétique supérieure en fonction du volume, de la surface et/ou de la masse de matériau conducteur magnétiquement.

2. Dispositif de porte de véhicule selon la revendication 1, **caractérisé en ce qu'**entre l'au moins un premier aimant permanent (30) et l'au moins un élément (32) conducteur magnétiquement, une fente d'air (d) est minimale lorsque l'au moins une porte coulissante (2) ou porte coulissante pivotante se trouve dans la position d'ouverture.

3. Dispositif de porte de véhicule selon l'une quelconque des revendications précédentes, **caractérisé en ce**que l'au moins un élément (32) conducteur magnétiquement forme une accumulation locale de matériau conducteur magnétiquement.

4. Dispositif de porte de véhicule selon l'une quelconque des revendications précédentes, **caractérisé en ce que** la force magnétique (48) est générée par l'interaction entre l'au moins un premier aimant permanent (30) et l'au moins un élément (32) conducteur magnétiquement se trouvant au moins dans la position d'ouverture dans le flux magnétique de l'au moins un premier aimant permanent (30).

5. Dispositif de porte de véhicule selon l'une quelconque des revendications précédentes, **caractérisé en ce que** la force magnétique (48) est une force de réluctance magnétique qui agit entre l'au moins un premier aimant permanent (30) et l'au moins un élément (32) conducteur magnétiquement de telle manière que la résistance magnétique du flux magnétique soit réduite ou minimale entre l'au moins un premier aimant permanent (30) et l'au moins un élément (32) conducteur magnétiquement lorsque l'au moins une porte coulissante (2) ou porte coulissante pivotante se trouve dans la position d'ouverture.

6. Véhicule, en particulier véhicule ferroviaire avec au moins un dispositif de porte de véhicule (1) selon l'une quelconque des revendications précédentes.
